# EUROPEAN PATENT APPLICATION

(11) **EP 2 713 483 A2**
(43) Date of publication of application: **02.04.2014**
(21) Application number: 13186114.8
(22) Date of filing: 26.09.2013
(51) Int. Cl.: H02K 7/18, H02K 49/10

(54) **Contactless generator, component therein and application thereof**

(30) Priority: 27.09.2012 TW 101135524; 08.02.2013 TW 102105008
(71) Applicant: Sunrising ECO-Friendly Technology Co., Ltd., Taichuang 428 (TW)
(72) Inventor: Liao, Kuang Yang, Taichuang 428 (TW)
(74) Representative: Chaillot, Geneviève

(57) **Abstract**

A contactless generator includes a generating module (10) and a magnetic module (20). The generating module (10) includes an energy converter (16) and a rotator (12). The rotator (12) has a surface and mechanical energy when rotating and is rotatable relative to the energy converter (16). The magnetic module (20) is mounted on the surface of the rotator (12), aligned with the energy converter (16), and produces an intrinsic magnetic field. The intrinsic magnetic field is subjected to a contactless active force from an external contactless moving metallic object and drives the rotator (12) to rotate. The energy converter (16) converts mechanical energy of the rotator (12) when rotating into electricity by a converting means.

## Description

### 1. Field of Invention

The present invention relates to a generator, and more particularly to a contactless generator, a component therein and an application thereof.

### 2. Description of the Related Art

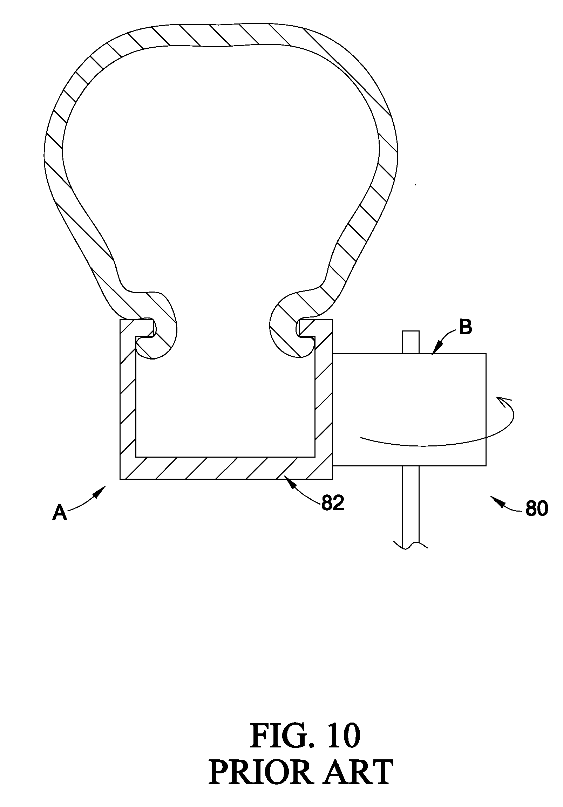

Conventional generators generally convert mechanical energy into electrical energy. For example, because usage of battery is sometimes inconvenient in bicycle and vehicle fields, contact generators or hub dynamos are common in the market. However, contact generators or hub dynamos have the following constraints and inconveniences.
1. With reference to Fig. 10, a contact generator (80) has a component (B) contacted with a surface of a rim (82) of a wheel (A). When the wheel (A) is rotated, the component (B) of the contact generator (80) is brought to rotate. Then the contact generator (80) converts mechanical energy of rotating into electrical energy. Because the electrical energy is produced by contacting the contact generator (80) with the wheel (A), this thus increases the effort a rider needs to apply and causes poor riding quality or additional physic consumption for the rider.
2. Although hub dynamos can provide better riding quality than that of contact generators, they must be integrated into a wheel. Thus, dynamo hubs cannot be installed or removed by a user. The costs of purchasing and servicing dynamo hubs are also higher.

To overcome the shortcomings, the present invention provides a contactless generator, an element therein and an application thereof to mitigate or obviate the aforementioned problems.

The primary objective of the present invention is to provide a contactless generator that can produce electricity without contacting and needs not to be integrated into a wheel. The present invention also provides an induction rotator component therein and a light output device thereof as an application.

A contactless generator in accordance with the present invention comprises a generating module (10) and a magnetic module (20). The generating module (10) comprises an energy converter (16) and a rotator (12). The rotator (12) has a surface and mechanical energy when rotating and is rotatable relative to the energy converter (16). The magnetic module (20) is mounted on the surface of the rotator (12), aligned with the energy converter (16), and produces an intrinsic magnetic field. The intrinsic magnetic field is subjected to a contactless active force from an external contactless moving metallic object and drives the rotator (12) to rotate. The energy converter (16) converts mechanical energy of the rotator (12) when rotating into electricity by a converting means.

The converting means may be that the energy converter (16) has a magnetic element connected to the rotator (12) and an induction coil mounted outside the energy converter (16). The induction coil is induced to produce an electricity output when the magnetic element is rotated.

The converting means may be that the rotator (12) has a magnetic element and the energy converter (16) has an induction coil aligned with the magnetic element. The induction coil is induced by a varying magnetic field from the magnetic element to produce an electricity output when the magnetic element is moved relative to the induction coil.

The magnetic module (20) may comprise multiple powerful magnets having a magnetic axis (20A) and mounted on the rotator (12) in a circular arrangement. The rotator (12) has a longitudinal axis (12A). An angle between the magnetic axis (20A) of each powerful magnet and the longitudinal axis (12A) of the rotator (12) is less than 30 degrees.

The magnetic module (20) may comprise multiple powerful magnets having a magnetic axis (20A) and mounted on the rotator (12) in a circular arrangement. The rotator (12) has a longitudinal axis (12A). The magnetic axis (20A) of each powerful magnet is perpendicular to the longitudinal axis (12A) of the rotator (12).

An induction rotator component in accordance with the present invention comprises a shaft and a magnetic module (20). The shaft has a surface and a longitudinal axis (12A). The magnetic module (20) is mounted on the surface of the shaft and positioned near a moving metallic object. The magnetic module (20) is subjected to an active force from an external magnetic field produced from the moving metallic object and brings the shaft to rotate. The magnetic module (20) comprises multiple powerful magnets having a magnetic axis (20A) and mounted in a circular arrangement. An angle between the magnetic axis (20A) of each powerful magnet and the longitudinal axis (12A) of the shaft is less than 30 degrees.

A light output device with contactless generating capability in accordance with comprises a generating module (10), a magnetic module (20) and a light-emitting module (14). The generating module (10) comprises an energy converter (16) and a rotator (12). The rotator (12) has a surface and mechanical energy when rotating and is rotatable relative to the energy converter (16). The magnetic module (20) is mounted on the surface of the rotator (12), aligned with the energy converter (16), and produces an intrinsic magnetic field. The intrinsic magnetic field is subjected to a contactless active force from an external contactless moving metallic object and drives the rotator (12) to rotate, and the energy converter (16) converts mechanical energy of the rotator (12) when rotating into electricity by a converting means. The light-emitting module (14) is connected to the energy converter (16) in a manner capable of transmitting electricity and produces a light output with the electricity converted by the energy converter (16).

The light output device may comprise multiple light-emitting elements electrically connected respectively with the energy converter (16). The electricity converted by the energy converter (16) is alternating and has positive half cycles and negative half cycles. Each of the light-emitting elements produces a light output at the positive half cycles or negative half cycles of the alternating electricity.

An energy storage element may be connected between the light-emitting module (14) and the energy converter (16). The energy storage element stores the electricity converted by the energy converter (16) and provides the electricity needed for the light output produced by the light-emitting module (14).

A changeover switch may be connected between the energy storage element and the energy converter (16) and is a light-sensing or manual changeover switch. The light output device with contactless generating capability is integrated into or movably mounted on a fork, a derailleur, a brake, a fender, a fender leg, a disc brake or a frame of a bicycle.

Other objectives, advantages and novel features of the invention will become more apparent from the following detailed description when taken in conjunction with the accompanying drawings.

### IN THE DRAWINGS

Figs. 1-4 are schematic representations of the present invention in use;
Fig. 5 is a perspective view of a first embodiment of the present invention;
Fig. 6 is a perspective view of a second embodiment of the present invention;
Fig. 7 is a perspective view of a third embodiment of the present invention;
Fig. 8 to 8C is a perspective view of a fourth embodiment of the present invention;

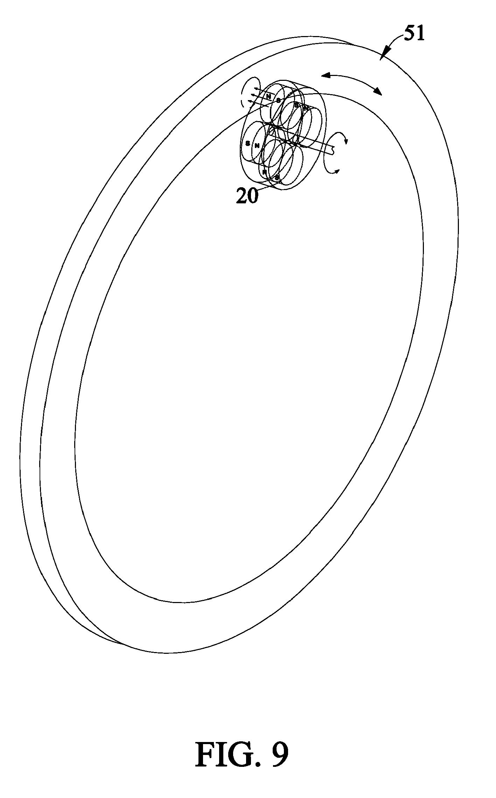

Fig. 9 is a part sectioned view of the fourth embodiment of the present invention; and
Fig. 10 is a schematic representation of a conventional contact generator.

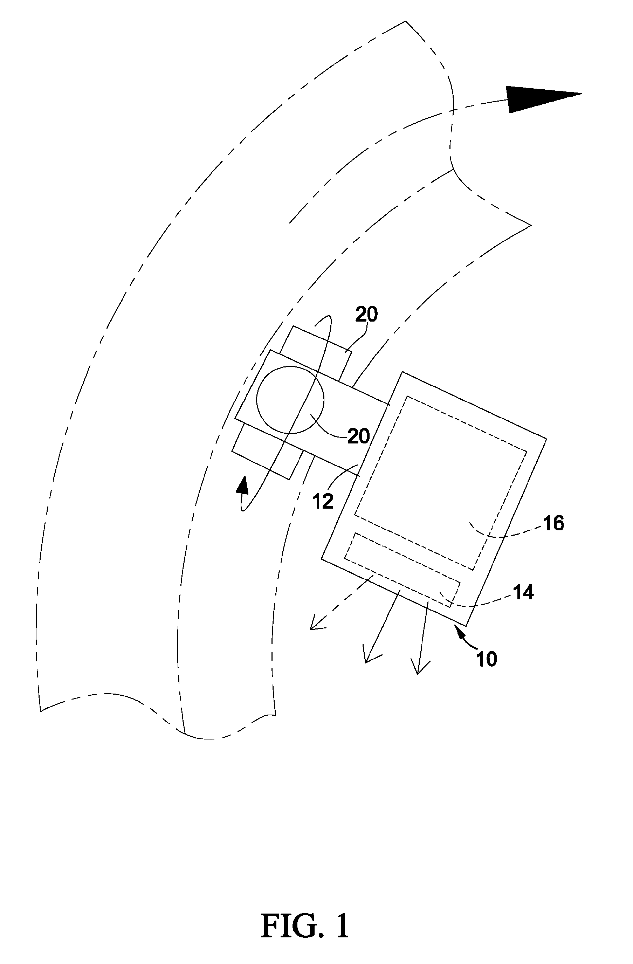

With reference to Figs. 1 to 4 illustrating a contactless generator in accordance with an embodiment of the present invention, the contactless generator comprises a generating module (10) and a magnetic module (20). The generating module (10) has a rotator (12) and an energy converter (16). The rotator (12) is rotatable relative to the energy converter (16) or other components of the generating module (10). In this embodiment, the rotator (12) may be a shaft rotatably inserted into the energy converter (16). When the rotator (12) is rotated relative to the energy converter (16), the energy converter (16) converts mechanical energy of the rotator (12) when rotating into electricity by a converting means. The converting means in this embodiment is that the rotator (12) has a magnetic element aligned with the energy converter (16) and energy converter (16) has an induction coil. When the rotator (12) is rotated, the magnetic element is brought to rotate relative to the energy converter (16), causing the induction coil to produce an induction electricity output. For example, the rotator (12) has a free end mounted on the magnetic element and the induction coil mounted outside the magnetic element. When the magnetic element is rotated along with the rotator (12), the induction coil is induced to produce induction current by a varying magnetic field from the magnetic element.

The magnetic module (20) is mounted on the rotator (12) and produces an outward intrinsic magnetic field relative to the rotator (12). The intrinsic magnetic field is subjected to an active force from an external magnetic field, causing the magnetic module (20) to rotate and turn the rotator (12). The magnetic module (20) of this embodiment comprises multiple powerful magnets mounted on the rotator (12). The powerful magnets produce the intrinsic magnetic field and may be, for example, N35∼N52 NdFeB magnets.

When the contactless generator is in use, the contactless generator is positioned near a moving metallic object. The moving metallic object has a continuous surface or multiple continuous surfaces aligned with at least one of the powerful magnets of the magnetic module (20) so that the moving metallic object is induced by the intrinsic magnetic field and produces the external magnetic field. Thus, a contactless active force is applied by the external magnetic field and the intrinsic magnetic field and makes the rotator (12) to rotate. When the rotator (12) is rotated, the energy converter (16) converts mechanical energy into electricity by the converting means described above. Thus, the magnetic module (20) is brought to rotate in a contactless manner by the moving metallic object during its moving. Accordingly, the rotator (12) is driven to rotate so that the energy converter (16) converts mechanical energy into electricity.

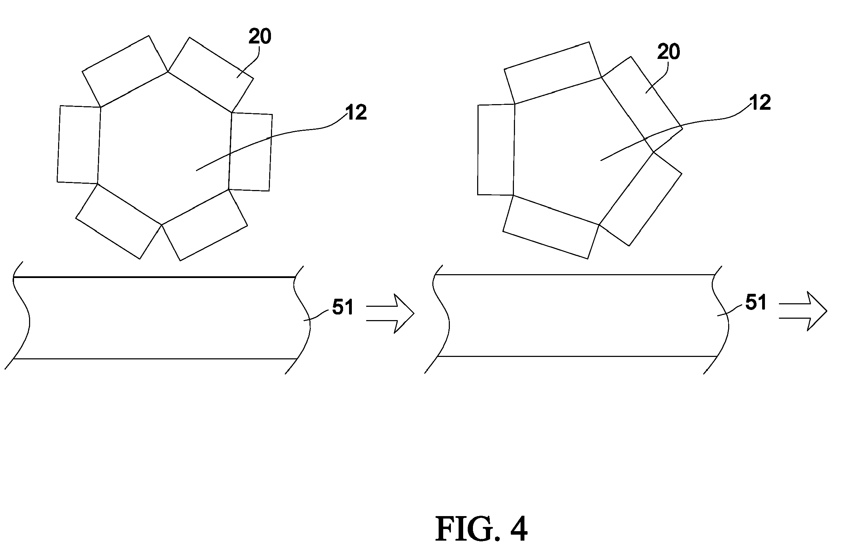

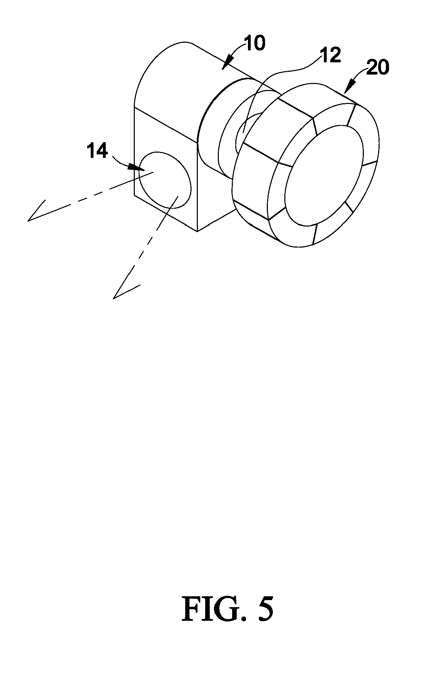

The configuration of the magnetic module (20) may include, but is not limited to, multiple cylindrical powerful magnets mounted on a circumferential surface of the rotator (12), as shown in Fig.4, or multiple arc-shaped powerful magnets mounted next to each other as shown in Fig. 5. Preferably, all of the powerful magnets are configured to allow each of the powerful magnets having a side with stronger magnetic field (N/S) facing outward.

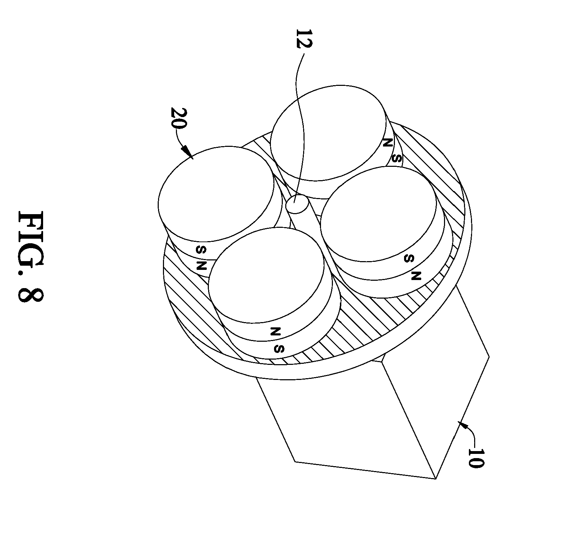

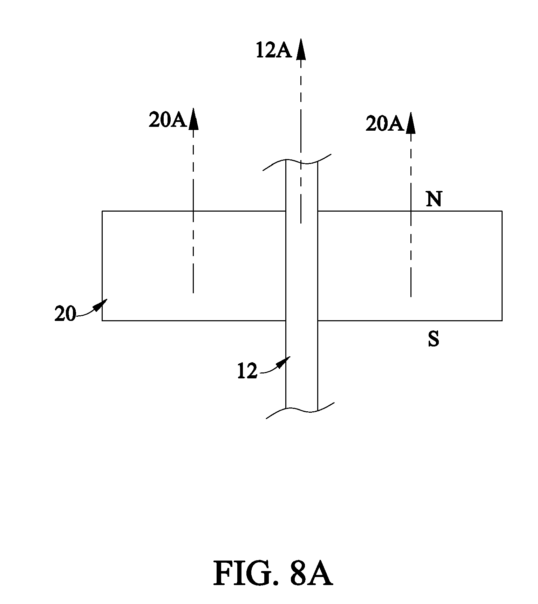

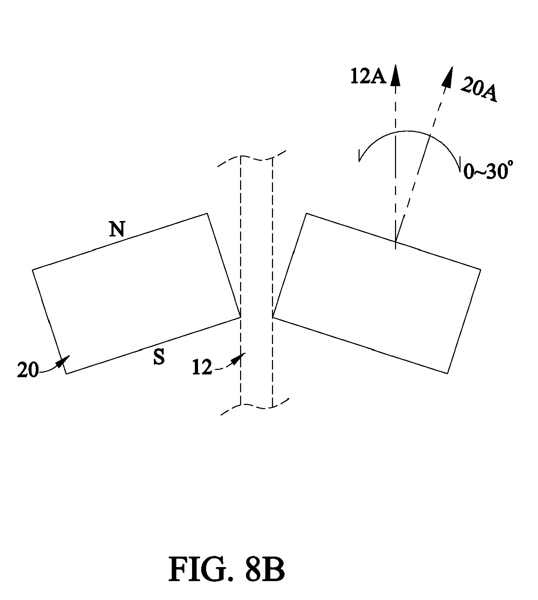

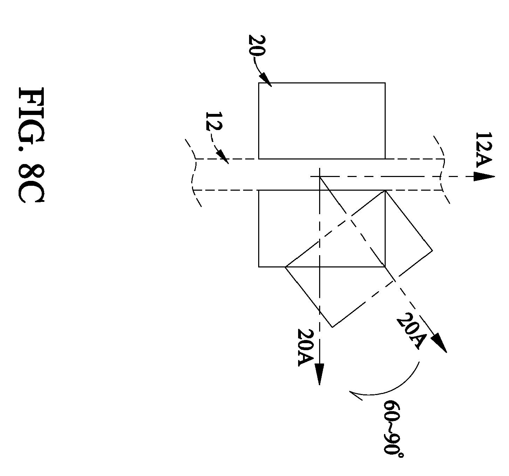

Furthermore, with reference to Fig. 8, 8A, 8B and 8C, each powerful magnet has a magnetic axis (20A). The rotator (12) has a longitudinal axis (12A) (12A).The magnetic axis (20A) might be parallel to the longitudinal axis (12A), as shown in Fig. 8, or the magnetic axis (20A) of the powerful magnet might be vertical to the longitudinal axis (12A) of the rotator (12) shown as Fig. 1, 4, 5 or 6. In the embodiment corresponding to Fig. 8, an angle between the magnetic axis (20A) of each powerful magnet and the longitudinal axis (12A) of the rotator (12) may be from 0 to 45 degrees, preferably from 0 to 30 degrees. When the angle is 0 degree, it means that the magnetic axis (20A) of each powerful magnet and the longitudinal axis (12A) of the rotator are toward the same direction, which is showed as Fig. 8A. With referred to Fig. 1, 4 and 5, the magnetic axis (20A) is normal to the longitudinal axis (12A) of the rotator (12). Preferred angle between the magnetic axis (20A) and the longitudinal axis (12A) might be 60∼90 degrees, as shown in Fig. 8C.

For example, the number of powerful magnets is at least two and the powerful magnets are arranged symmetrically about a symmetry point, such as the rotator (12). Preferably, the number of powerful magnets is 4 to 10. In this embodiment in Fig. 8, the magnetic module (20) comprises four powerful magnets. Adjacent powerful magnets are spaced from each other or contacted with each other. Poles (N or S) of the adjacent powerful magnets are alternatively placed. The powerful magnets may be cylindrical or polygonal sheets or pillars, such as tetragonal, hexagonal, sector shaped, trigonal, trapezoid, etc. If the powerful magnets are spaced from each other with a distance, the number of the powerful magnet may be odd and the poles of the powerful magnets toward outward might be the same. The said distance is designed for providing an easier assembling for the powerful magnets mounted on the rotator (12) with the same poles of adjacent powerful magnets facing outward.

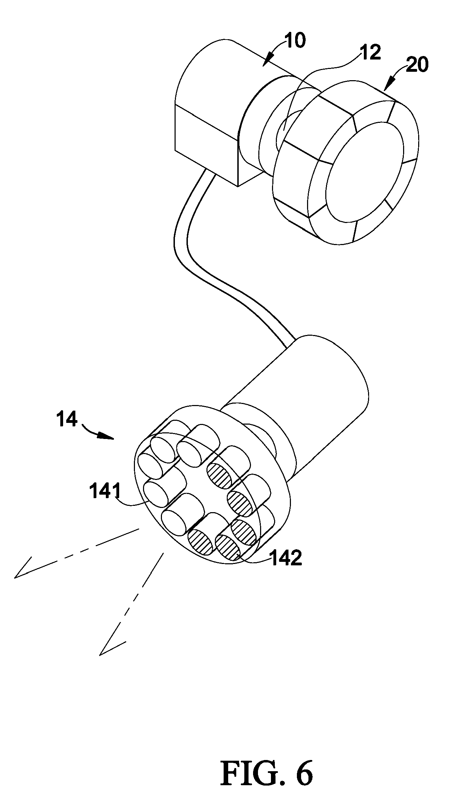

Furthermore, the contactless generator may comprise a light-emitting module (14), which is electrically connected to the energy converter (16) directly or indirectly and produces a light output with the electricity converted by the energy converter (16). The light-emitting module (14) may comprise two light-emitting elements (141, 142) electrically connected to the energy converter (16). When the electricity produced from the energy converter (16) is alternating, the light-emitting elements (141, 142) generate light output respectively at positive half cycles and negative half cycles of the alternating electricity, as shown in Fig. 6. By "electrically connected indirectly", it means that an energy storage element and/or a rectifier may be connected between the light-emitting module (14) and the energy converter (16). The energy storage element can store the electricity converted by the energy converter (16), providing the electricity needed for the light output produced from the light-emitting module (14). The light-emitting elements may be, but are not limited to, a light-emitting diode, an organic light-emitting diode, a bulb, etc. The activation of the energy storage element may be controlled with a changeover switch so that the electricity converted is stored when ambient (environment) light is sufficient and used subsequently when ambient light is insufficient. The changeover switch may be a common manual changeover switch, or use a light-sensing (luminance-sensing) means to switch. For example, the changeover switch may be a light sensitive element. When ambient light is sufficient, the light sensitive element processes, such as rectifies or regulates, the electricity converted by the energy converter (16) and outputs the processed electricity to the energy storage element for storage. Conversely, when ambient light is insufficient, the light sensitive element processes may or may not rectify the electricity from the energy converter (16) and output the electricity to the light-emitting module (14).

The light-emitting module (14) may be integrated into or mounted on the generating module (10) and the magnetic module (20), as shown in Fig. 5. The light-emitting module (14) may also be independently or detachably mounted outside the generating module (10), as shown in Fig. 6.

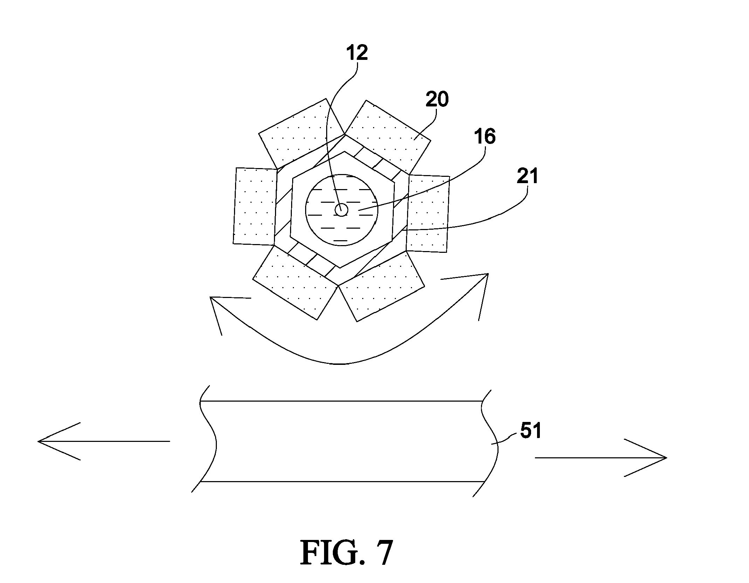

Furthermore, the energy converter (16) may also aligned with the magnetic module (20) so that the energy converter (16) can be induced by the varying intrinsic magnetic field from the magnetic module (20) to produce an induction electricity output when the magnetic module (20) is rotated. For example, the energy converter (16) may be slipped over and spaced from an outer portion of the magnetic module (20) and comprise an induction coil, which is induced by the varying intrinsic magnetic field from the magnetic module (20) to produce the induction electricity output. Alternatively, with reference to Fig. 7, the magnetic module (20) may be mounted on an outer surface of a sleeve (21) so that the magnetic module (20) is slipped over and spaced from the energy converter (16). When the magnetic module (20) is subjected to an active force from an external magnetic field and rotated, the sleeve (21) and the magnetic module (20) are rotated relative to the energy converter (16). Thus, the energy converter (16) is induced by the varying intrinsic magnetic field from the magnetic module (20) to produce the induction electricity output.

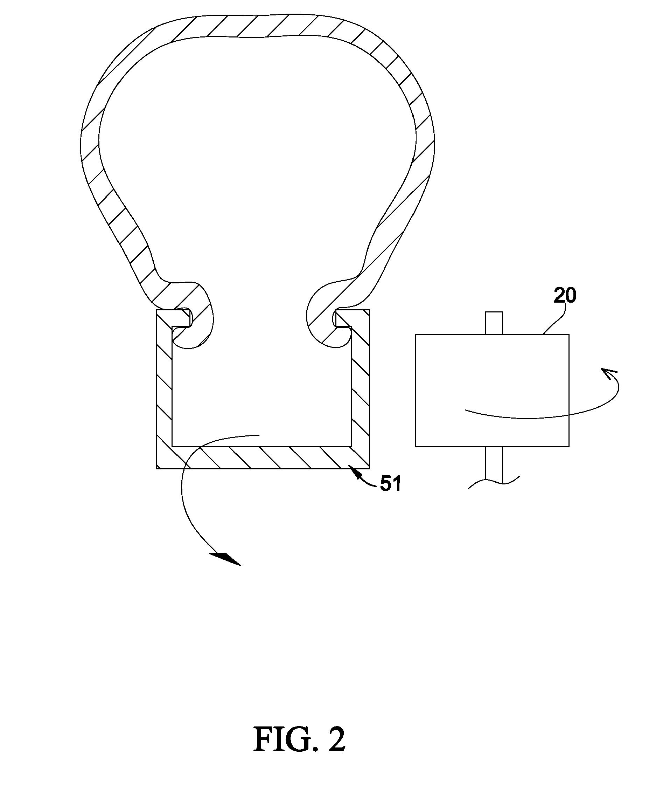

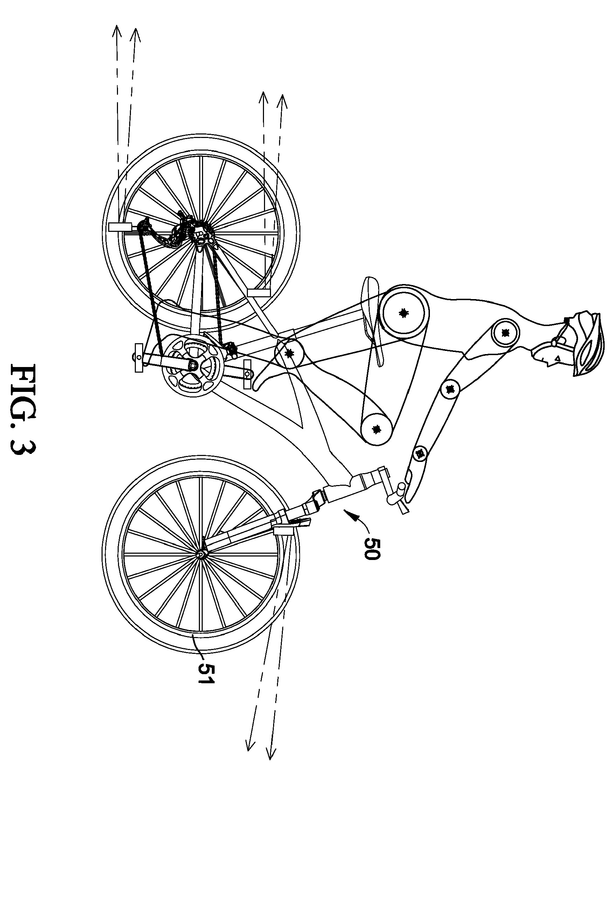

The contactless generator can be used in conjunction with a moving metallic object to produce an induction electricity output. For example, with reference to Fig. 2, 3 and Fig. 4 illustrating a practical application on a bicycle (50), the magnetic module (20) of this embodiment is aligned with and positioned near a moving surface of a moving metallic object of the bicycle (50), which is moving when riding or using the bicycle (50). The moving metallic object of the bicycle (50) may be a wheel rim (51), a brake disc or a chainring having a continuous surface and made of aluminum alloy, steel, magnesium aluminum alloy, magnesium alloy, etc. When riding the bicycle (50), the magnetic module (20) is subjected to an active force from an external magnetic field produced from the wheel rim (51) or the brake disc and rotated, thus achieving the effect of converting mechanical energy into electricity described above. In practical use, methods of mounting this embodiment may include, but are not limited to, mounting on a fork, a derailleur, a brake, a fender, a fender leg or a frame, as shown in Fig. 3.

Furthermore, the energy storage element of the contactless generator may be connected to a warning light output element. When the energy converter (16) stops converting electricity, the warning light output element produces a warning light output by using the electricity provided by the energy storage element. Thus, when the moving object stops moving, the warning light output element allows this embodiment of the present invention to produce a warning light output.

With respect to a practical application, this embodiment can be applied on various uses. For example, this embodiment can be used for sensing or warning that an object is moving or rotating, etc. When sensing a metallic object is moving or rotating, a portion of the magnetic module (20) is positioned near a movable object. When the movable object is moving fast enough, the magnetic module (20) is brought to rotate, thereby determining the movable object is moving at a specific speed. With respect to a warning application, this embodiment may be positioned near a rotating mechanism of a machine, such as a belt driving wheel, a shaft, a fan, a vehicle wheel rim, etc. When a rotating element of the rotating mechanism is rotated to a specific rotating speed, this embodiment is brought to rotate and output a current or produce a warning light output for providing a warning effect.

From aforementioned descriptions, the present invention has the following advantages.
1. The present invention is a contactless generator. Thus, lighting or warning light output can be provided to a rider without having friction, solving the shortcoming of conventional contact generators.
2. The present invention is not integrated to a wheel and its use has almost no limitation. It can be mounted on any position as long as it can produce an induction magnetic field. Therefore, the present invention is convenient and low cost, eliminating the problem of conventional hub dynamos.

Even though numerous characteristics and advantages of the present invention have been set forth in the foregoing description, together with details of the structure and function of the invention, the disclosure is illustrative only. Changes may be made in detail, especially in matters of shape, size and arrangement of parts within the principles of the invention to the full extent indicated by the broad general meaning of the terms in which the appended claims are expressed.

## Claims

1. A contactless generator comprising a generating module (10) and a magnetic module (20), **characterized in that** the generating module (10) has an energy converter (16) and a rotator (12) having a surface and mechanical energy when rotating and being rotatable relative to the energy converter (16); and the magnetic module (20) being mounted on the surface of the rotator, aligned with the energy converter (16), and producing an intrinsic magnetic field, wherein the intrinsic magnetic field is subjected to a contactless active force from an external contactless moving metallic object and drives the rotator (12) to rotate, and the energy converter (16) converts mechanical energy of the rotator (12) when rotating into electricity by a converting means.

2. The contactless generator as claimed in claim 1, **characterized in that** the converting means is that the energy converter (16) has a magnetic element connected to the rotator and an induction coil mounted outside the energy converter (16); and the induction coil is induced to produce an electricity output when the magnetic element and the rotator is rotated.

3. The contactless generator as claimed in claim 1, **characterized in that** the converting means is that the rotator has a magnetic element and the energy converter (16) has an induction coil aligned with the magnetic element; and the induction coil is induced by a varying magnetic field from the magnetic element to produce an electricity output when the magnetic element is moved relative to the induction coil.

4. The contactless generator as claimed in claim 1 or 2 or 3, **characterized in that** the magnetic module (20) comprises multiple powerful magnets having a magnetic axis (20A) and mounted on the rotator (12) in a circular arrangement; the rotator has a longitudinal axis (12A); and an angle between the magnetic axis (20A) of each powerful magnet and the longitudinal axis (12A) of the rotator is less than 30 degrees.

5. The contactless generator as claimed in claim 1, 2 or 3, **characterized in that** the magnetic module (20) comprises multiple powerful magnets having a magnetic axis (20A) and mounted on the rotator (12) in a circular arrangement; the rotator has a longitudinal axis (12A); and an angle between the magnetic axis (20A) of each powerful magnet and the longitudinal axis (12A) of the rotator is 60 to 90 degrees.

6. An induction rotator component intended to be included in the contactless generator as claimed in anyone of claims 1 to 5 comprising a shaft and a magnetic module (20), **characterized in that** the shaft has a surface and a longitudinal axis (12A), the magnetic module (20) mounted on the surface of the shaft and positioned near a moving metallic object; the magnetic module (20) is subjected to an active force from an external magnetic field produced from the moving metallic object and brings the shaft to rotate; the magnetic module (20) comprises multiple powerful magnets having a magnetic axis (20A) and mounted in a circular arrangement; and an angle between the magnetic axis (20A) of each powerful magnet and the longitudinal axis (12A) of the shaft is 0 to 30 degrees or 60 to 90 degrees .

7. A light output device with contactless generating capability comprising a generating module (10), a magnetic module (20) and a light-emitting module (14), **characterized in that** the generating module (10) comprises an energy converter (16) and a rotator (12), the rotator (12) has a surface and mechanical energy when rotating and being rotatable relative to the energy converter (16); the magnetic module (20) being mounted on the surface of the rotator (12), aligned with the energy converter (16), and producing an intrinsic magnetic field, wherein the intrinsic magnetic field is subjected to a contactless active force from an external contactless moving metallic object and drives the rotator (12) to rotate, and the energy converter (16) converts mechanical energy of the rotator (12) when rotating into electricity by a converting means; and the light-emitting module (14) is connected to the energy converter (16) in a manner capable of transmitting electricity and producing a light output with the electricity converted by the energy converter (16).

8. The light output device with contactless generating capability as claimed in claim 7, **characterized in that** the light output device comprises multiple light-emitting elements electrically connected respectively with the energy converter (16); the electricity converted by the energy converter (16) is alternating and has positive half cycles and negative half cycles; and each of the light-emitting elements produces a light output at the positive half cycles or negative half cycles of the alternating electricity.

9. The light output device with contactless generating capability as claimed in claim 7 or 8, **characterized in that** an energy storage element is connected between the light-emitting module (14) and the energy converter (16); and the energy storage element stores the electricity converted by the energy converter (16) and provides the electricity needed for the light output produced by the light-emitting module (14).

10. The light output device with contactless generating capability as claimed in claim 7, 8 or 9, **characterized in that** a changeover switch is connected between the energy storage element and the energy converter (16) and is a light-sensing or manual changeover switch.

11. The light output device with contactless generating capability as claimed in claim 7, 8, 9 or 10, **characterized in that** the light output device with contactless generating capability is integrated into or movably mounted on a fork, a derailleur, a brake, a fender, a fender leg, a disc brake or a frame of a bicycle.
